# EUROPEAN PATENT APPLICATION

(11) **EP 2 371 891 A2**
(43) Date of publication of application: **05.10.2011**
(21) Application number: 10169057.6
(22) Date of filing: 09.07.2010
(51) Int. Cl.: C08K 9/04, C09C 3/04

(54) **Use of modified inorganic particles as aldehyde scavenger and curing agent, in particular in wood based panels**

(30) Priority: 09.03.2010 EP 10155928
(71) Applicant: Borealis Agrolinz Melamine GmbH, 4021 Linz (AT)
(72) Inventor: Dicke, René, 4060 Leoding (AT); Rot, Katarina, 4060 Leoding (AT)
(74) Representative: Morawski, Birgit

(57) **Abstract**

The present invention relates to the use of at least one inorganic particle having a layered structure and being modified by cation exchange, in particular as a functional additive, as an aldehyde scavenger, in particular as a formaldehyde scavenger, as a curing agent and for improving properties of WBPs, in particular particle boards. The invention relates further to a composition comprising said particles.

## Description

The invention relates to the use of modified inorganic particles according to claim 1, compositions and wood based panels (WBP) comprising the modified inorganic particles according to claims 7 and 12, respectively, and a method for scavenging aldehyde in aldehyde based resins according to claim 13.

Formaldehyde based resins are widely used as adhesives, respectively glues or binders for the manufacturing of WBP, like chipboards or particle boards (PB), OSB, MDF, LDF or HDF and plywood. These boards are often processed to furniture which is mainly used indoors. However, the use of formaldehyde based resins has the drawback that the hazardous formaldehyde is released over a long period of time. Such formaldehyde release is of course undesirable. Thus, formaldehyde reduction in formaldehyde based adhesives used in the production of WBP, in particular of particle boards, has been of importance in the course of the last 30 years.

Today's trends in development of wood glues are directed towards reducing formaldehyde emissions with the goal of achieving EPF-S industrial standard or more stringent Japanese limit F**** (formaldehyde emission by desiccator method JIS A 1460) or even the level of native wood. Currently, there are no legislative requirements for reducing formaldehyde release to such an extent; however, it could become relevant very soon.

Various techniques have been used in the past to reduce formaldehyde emission from formaldehyde based resins and the WBP manufactured thereof.

One approach is to reduce the overall concentration of formaldehyde in the resin. This is for instance being achieved by reducing the molar ratio of formaldehyde to urea (F:U) as far as below 1.0 (US 5,684,118). Another possibility is to add urea either dry in microprilled form at the plant size or as a solution typically at a concentration of 40 parts urea to 60 parts water (Steve Sauter, Formaldehyde scavenger system, Resin Blending Semin. 1998 Proc. 2, 2000, p. 17-22).

Furthermore, the production lines for panels, in particular for particle boards, can be adjusted by changing process conditions as well as the technical equipment. The finished panels can be post treated, for instance in an Ammonia chamber whereby gaseous ammonia is passed through a stack of panels.

It is also of course possible to use formaldehyde free binders like isocyanates. The application of these binders has however several drawbacks in respect to processability and costs. The use of alternative aldehydes has been established, but due to their poor mechanical properties, dark colour and high costs they do not offer any specific advantages over the use of formaldehyde.

One approach for formaldehyde reduction often applied in the past is the application of formaldehyde scavengers. These are substances able to reduce formaldehyde emissions by reacting with free formaldehyde. The most commonly used formaldehyde scavengers include for instance melamine (WO 2006/127818 A1), substituted urea, alkylated melamine, urethane, guanidine, aliphatic amines and amides (WO 2006/134083 A1), amino acids like lysine, glycine, serine, allantoin, ascorbic acid, glucose, pyrogallol and many more (WO 2007/091223 A1). In all cases the properties of the produced particle boards or the processing behaviour are changed significantly to lower performance.

Hayashi et al. (Solid state sciences, 2009, 11: 1007-1015) offer a further alternative approach. The article describes the intercalation of melamine into layered zirconium phosphates and their ability to adsorb formaldehyde in gas and solution phase. However, the application of these particles for reducing the formaldehyde content in particle boards is not disclosed, specifically not the performance of above named particles at higher temperatures, i. e. above 180° C, and would also not be practicable predominately due to melamine characteristic of retarding the curing of a glue.

The application of the above listed methods for formaldehyde reduction is, however, often accompanied by several disadvantages and drawbacks.
a) A general replacement of the hazardous formaldehyde is difficult since formaldehyde is so far the most suitable cross-linker for urea-formaldehyde, melamine-urea-formaldehyde, phenol based resins or their mixtures and is for instance also able to undergo a reaction with cellulose.
b) Although the addition of urea reduces the formaldehyde content in the respective resin it has negative effects on swelling in water and mechanical properties of the obtained WBP.
c) An overall reduction of formaldehyde in a binder can cause a deterioration of the mechanical properties of the WBP.
d) The use of melamine as a formaldehyde scavenger reduces productivity and thus increases costs. This is due to the alkaline properties of melamine which leads to a pH-increase and thus reducing the curing speed. This can only be counteracted by adding a relatively high amount of hardener what in turn increases the brittleness of the wood composites and consequently influences the mechanical properties of the wood composites.

It was therefore an object of the present invention to provide an aldehyde scavenger, in particular a formaldehyde scavenger, and/or at the same time a curing agent for aldehyde based resins, respectively glues or adhesives for manufacturing of WBP having an improved performance which overcomes the above described drawbacks.

It was furthermore an object of the present invention to provide a functional additive for a resin which is able to act simultaneously as an aldehyde scavenger, as a curing agent for curing aldehyde based resins and is even capable to improve the performance of WBP comprising the functional additive.

In the context of the present invention a functional additive is a compound, in particular for resins, which is defined as a chemical substance or other material added to a polymer or resin formulation in order to change the final property or properties of the polymer/resin-product.

These objects and other objects were solved by the use of modified inorganic particles according to independent claim 1.

Accordingly, at least one inorganic particle having a layered structure and being modified by cation exchange, is being used, in particular as a functional additive being active
a) as an aldehyde scavenger, in particular formaldehyde scavenger in an aldehyde based resin, in particular a formaldehyde based resin, and / or
b) as a curing agent for curing an aldehyde based resin, in particular a formaldehyde based resin, and / or
c) in at least one wood based panel (WBP), in particular a particle board, OSB, LDF, MDF, HDF and plywood, for improving the properties of said panels, in particular for reducing swelling in water, improving mechanical properties, in particular increasing transverse tensile strength and/or bending strength of said panel.

In the context of the present invention the cation is to be understood as being an inorganic cation or an organic cation in form of a positively charged organic compound like organic compounds containing amino groups which are usually present in their positively charged form.

In a preferred embodiment the at least one inorganic particle is being modified by cation exchange using at least one cation selected from the group containing H⁺, NH⁴⁺, Al³⁺, Fe³⁺, Sn²⁺, Mg²⁺, Li⁺, Mn²⁺, melamine derivatives, thiourea, thiourea derivatives, urea, urea derivatives, guanidine, guanidine derivatives, cyanamide, dicyandiamide, sulfonamides, aniline, alkyl and aryl amines, alkyl and aryl amides, proteins, amino acids intercalated into the layered structure of the inorganic particle.

The preferred cations or positively charged compounds are able to replace the cations originally located in the layered structure of the inorganic particle. The process of cation exchange is preferably carried out by an acidic treatment of the layered inorganic particles with an appropriate acid like an inorganic, organic and/or Lewis acid or by treatment in solution containing one of the positively charged organic compounds.

Suitable inorganic acids are HCl, H₂SO₄, H₃PO₄, HNO₃ or HClO₄. Organic acids are acetic acid, oxalic acid, p-toluenesulfonic acid. Typical lewis acids are AlCl₃, FeCl₃, Al(OH)₃.

Suitable amines are for instance hydrazines, aromatic amines, aromatic diamines, aminobenzoic acid and its derivatives, 2-amino-2-methyl-1-propanol, benzoguanamine, urethanes, allylamines, imidazol and others. Suitable amino acids are for instance arginine, lysine or asparagine. Proteins containing asparagine, arginine and lysine, in particular casein, gelatin, gluten, whey protein, soy protein, collagen or amino group containing polymers like poly(vinyl)amine, 3-aminopropylvinylether, 3-aminopropylmethacrylat, 2-aminoethylmethacrylat, 4-aminobutylmethacrylat, 5-aminopentylmethacrylat, 3-aminopropylacrylat, 2-aminopropylacrylat, 4-aminobutylacrylat, 5-aminopentylacrylat, 2-aminoethylvinylether, 4-aminobutylvinylether and/or 5-aminopentylvinylether can be used. Suitable amides are amongst others for instance caprolactam, hydantoin, polyamides, nylon and derivatives thereof.

It is also conceivable to apply a thiol containing compound like for instance vinyl mercaptane.

Suitable melamine derivatives, urea derivatives, and suitable salts of melamine derivatives, urea, urea derivatives, guanidine, guanidin derivatives, cyanamide, dicyanamide, sulfonamides and/or aniline are described in more detail below.

The positively charged organic compounds, in particular amino group containing compounds, can be applied in combination with acetal forming compounds, in particular glycol, diethylene glycol, saccharides, like glucose, D-sorbitol, Sucrose, starch, Pectin, tannins or tannic acids.

In a further preferred embodiment a mixture of at least one inorganic particle having a layered structure and being modified by cation exchange and at least one non-modified inorganic particle having a layered structure is applied. The preferred ratio of modified and non-modified particles is between 1:1 and 1: 10, in particular preferably between 1:1 and 1:5.

This combination of such a modified inorganic particle with a typical inorganic particle for example, silicates, phosphates, arsenates, titanates, vanadates, niobates, molybdates and/or manganates, in particular sheet silicates or clays of the type consisting of montmorillonite, bentonite, kaolinite, muscovite, hectorite, fluorohectorite, canemite, revdite, grumantite, ilerite, saponite, beidelite, nontronite, stevensite, laponite, taneolite, vermiculite, halloysite, volkonskoite, magadite, rectorite, halloysite, kenyaite, sauconite, borofluorophlogopites and/or synthetic sheet silicates, which are known for adsorption properties, leads to a functional additive for a resin which is able to act simultaneously as an aldehyde scavenger, as a curing agent for curing aldehyde based resins and is even capable to improve the performance of WBP comprising the functional additive.

It is further preferred to use at least one modified inorganic particle having a layered structure comprising at least one aminoplast as an outer coat and at least one polyfunctional C₁-C₃₀ amino compound selected from the group comprising melamine, melamine derivatives, urea, urea derivatives, guanidine, guanidine derivatives, cyanamide, dicyandiamide, sulfonamides, aniline, alkyl and aryl amines, alkyl and aryl amides, proteins and/or amino acids intercalated into the layered structure of the inorganic particle as an aldehyde scavenger, in particular as a formaldehyde scavenger. Preferred compounds being intercalated into the inorganic particle are described in detail in this application elsewhere.

Such a preferably modified particle is furthermore used as a curing agent for curing an aldehyde based resin, in particular a formaldehyde based resin.

The preferably modified particle is also applied and incorporated in at least one WBP, in particular in a particle board, OSB, LDF, MDF, HDF or in plywood. The addition of the at least one modified inorganic particle to the at least one WBP leads to an improvement of several properties of said WBP, in particular reduced swelling in water and improvement of mechanical properties.

The swelling in water of the at least one WBP is preferably reduced to values below 9%, whereas the transverse tensile strength (tensile strength perpendicular to the plane of the board) is increased to values above 1.0 N/mm² and the bending strength is increased to values above 25 N/mm². The provided values are valid for a typical particle board having thicknesses between 6 and 13 mm and are better than standard values according to EN 312 for the highest class of moisture resistance.

The object of the present invention is also solved by the use of at least one preferably modified inorganic particle as a functional additive, in particular for resins and the products comprising these resins. As a functional additive the modified inorganic particle has multiple functions. It acts simultaneously as an aldehyde scavenger, in particular formaldehyde scavenger in an aldehyde based resin, in particular a formaldehyde based resin, and as a curing agent for aldehyde based resin, in particular formaldehyde based resin. Furthermore, admixing the particles into aldehyde based resin or glue applied in the production process of the panels improves properties of the WBP. Properties like swelling in water, bending strength and/or transverse tensile strength of the WBP are especially improved.

The preferably modified inorganic particles used according to the present invention are known (WO 2002/048248 A1).

In a preferred embodiment, the outer coat of the inorganic particle comprises from 0.1 to 20 wt%, based on the anhydrous inorganic particle, of the at least one aminoplast. The amount of the at least one polyfunctional C₁-C₃₀ amino compound of the type consisting of melamine, melamine derivatives, urea, urea derivatives, guanidine, guanidine derivatives, cyanamide, dicyandiamide, sulfonamides, aniline and/or their mixtures intercalated into the layer structure is preferably from 20 to 5 000 wt%, based on the anhydrous inorganic particle whereby the polyfunctional C₁-C₃₀ amino compounds are preferably applied in form of a mixture comprising 50 to 98 wt% of the polyfunctional C₁-C₃₀ amino compounds. The water content of the modified inorganic particles is preferably from 2 to 50 % by mass of water.

Suitable inorganic particles having a layered structure are, for example, silicates, phosphates, arsenates, titanates, vanadates, niobates, molybdates and/or manganates, in particular sheet silicates or clays of the type consisting of montmorillonite, bentonite, kaolinite, muscovite, hectorite, fluorohectorite, canemite, revdite, grumantite, ilerite, saponite, beidelite, nontronite, stevensite, laponite, taneolite, vermiculite, halloysite, volkonskoite, magadite, rectorite, halloysite, kenyaite, sauconite, borofluorophlogopites and/or synthetic sheet silicates, the sheet silicates furthermore particularly preferably being sheet silicates having exchangeable cations of the type consisting of alkali metal, alkaline earth metal, aluminum, iron and/or manganese cations. Examples of suitable phosphates having a layer structure are compounds of the formula H₂[M^{IV}(PO₄)2].ₓH₂O (M^{IV} = Zr, Ti, Ge, SN, Pb) and CaPO₄R·H₂O (R = CH₃; C₂H₅). Examples of suitable arsenates having a layer structure are compounds of the formula H₂[M^{IV}(AsO₄)₂].ₓH₂O and H[Mn(AsO₄)₂].ₓH₂O. Examples of suitable titanates having a layer structure are compounds of the formula Na₄Ti₈O₂₀.ₓH₂O and K₂Ln₂Ti₃O₁₀ₓH₂O. Synthetic sheet silicates are obtained, for example, by reacting natural sheet silicates with sodium hexafluorosilicate. Particularly preferred sheet silicates are those whose layers have an interlayer spacing of about 0.4 nm to 1.5 nm.

The aminoplast of the outer coat of the modified inorganic particles used in the present invention is preferably selected from a group comprising melamine resins, urea resins, cyanamide resins, dicyandiamide resins, sulfonamide resins, guanamine resins and/or aniline resins.

Preferred melamine resins are polycondensates of melamine or melamine derivatives and C₁-C₁₀-aldehydes having a molar melamine or melamine derivative to C₁-C₁₀-aldehydes ratio of from 1 : 1 to 1 : 6 and the partial etherification products thereof with C₁-C₁₀-alcohols, preferred melamine derivatives being melamines, diaminomethyltriazines and/or diaminophenyltriazines substituted by hydroxy-C₁-C₁₀-alkyl groups, hydroxy-C₁-C₄-alkyl(oxa-C₂-C₄-alkyl)₁₋₅ groups and/or by amino-C₁-C₁₂-alkyl groups, particularly preferably 2-(2-hydroxyethylamino)-4,6-diamino-1,3,5-triazine, 2-(5-hydroxy-3-oxapentylamino)-4,6-diamino-1,3,5-triazine and/or 2,4,6-tris(6- Aminohexylamino)-1,3,5-triazine, ammeline, ammelide, melem, melon, melam, benzoguanamine, acetoguanamine, tetramethoxymethylbenzoguanamine, caprinoguanamine and/or butyroguanamine, and the C₁-C₁₀-aldehyde are preferably formaldehyde, acetaldehyde, trimethylolacetaldehyde, acrolein, furfurol, glyoxal and/or glutaraldehyde, particularly preferably formaldehyde. The melamine resins in the outer coat of the modified inorganic particles can likewise contain from 0.1 to 10% by mass, based on the sum of melamine and melamine derivatives, of incorporated phenols and/or urea. Suitable phenol components here are phenol, C₁-C₉-alkylphenol, hydroxyphenols and/or bisphenols. Examples of partial etherification products of melamine resins with C₁-C₁₀-alcohols are methylated or butylated melamine resins.

Examples of urea resins applied as aminoplasts in the outer coat of the particle can be co-condensates with phenols, acid amides or sulfonamides, in addition to urea/formaldehyde resins. Examples of sulfonamide resins optionally contained as aminoplasts in the outer coat of the modified inorganic particles can be sulfonamide resins obtained from p-toluenesulfonamide and formaldehyde. Suitable guanamine resins are resins which contain benzoguanamine, acetoguanamine, tetramethoxymethylbenzoguanamine, caprinoguanamine and/or butyroguanamine as guanamine components.

Examples of aniline resins as aminoplasts in the outer coat of the modified inorganic particles are aniline resins which, in addition to aniline, may also contain toluidine and/or xylidines as aromatic diamines.

The melamine derivatives optionally forming an interlamellar content in the modified inorganic particles are preferably melamines, diaminomethyltriazines and/or diaminophenyltriazines substituted by hydroxy-C₁-C₁₀-alkyl groups, hydroxy-C₁-C₁₀-alkyl(oxa-C₂-C₄-alkyl)₁₋₅ groups and/or by amino-C₁-C₁₂-alkyl groups, preferably 2-(2-hydroxyethylamino)-4,6-diamino-1,3,5-triazine, 2-(5-hydroxy-3-oxapentylamino)-4,6-diamino-1,3,5-triazine, 2,4,6-tris(6-aminohexylamino)-1,3,5-triazine and/or 2,4-(di-5-hydroxy-3-oxapentylamino)-6-methyl-1,3,5-triazine, ammeline, ammelide, melem, melon and/or melam.

The urea derivatives optionally forming an interlamellar content in the modified inorganic particles are thiourea and urea or thiourea substituted by C₁-C₁₀-alkyl groups, C₆-C₁₄-aryl groups, hydroxy-C₁-C₁₀-alkyl groups, hydroxy-C₁-C₄-alkyl(oxa-C₂-C₄-alkyl)₁₋₅ groups and/or by amino-C₁-C₁₂-alkyl groups, preferably urea, 1,1-dimethyl-3-phenylurea, 3,3'-(4-methyl-1,3-phenylene)-bis-(1,1-dimethylurea).

The guanidine derivatives optionally forming an interlamellar content in the modified inorganic particles are biguanides, preferably 1-(o-tolyl)-biguanide.

The salts of melamine, melamine derivatives, urea, urea derivatives, guanidine, guanidine derivatives, cyanamide, dicyandiamide, sulfonamides and/or aniline which optionally form an interlamellar content in the modified inorganic particle are preferably salts having inorganic and/or organic anions, in particular fluorides, chlorides, bromides, iodides, sulfates, phosphates, nitrates, borates, silicates, cyanurates, tosylates, formates, acetates, propionates, butyrates and/or maleates.

The preferably modified inorganic particles can be prepared by a process comprising the following steps:
a) homogenizing a suspension of inorganic particles having a layer structure in water or mixtures of from 5 to 99 wt% of water and from 95 to 1 wt% of C₁-C₈-alcohols, in a stirred reactor at 20 to 100°C for 10 to 180 min, with solutions or suspensions of polyfunctional C₁-C₃₀ amino compounds of the type consisting of melamine, melamine derivatives, urea, urea derivatives, guanidine, guanidine derivatives, cyanamide, dicyandiamide, sulfonamides and/or aniline and the salts thereof in water or mixtures of from 5 to 99 wt% of water and from 95 to 1 wt% of C₁-C₈-alcohols, followed by
b) adding to said dispersion comprising the laden inorganic particles, optionally after the liquid phase has been partially separated off, of aminoplast prepolymers of the type consisting of melamine resins, urea resins, cyanamide resins, dicyandiamide resins, sulfonamide resins, guanamine resins and/or aniline resins having a number average molar mass of from 150 to 1 000 being introduced as a solution in water and/or in organic solvents or solvent mixtures, having a resin content of from 30 to 98 wt%, and optionally from 0.1 to 2.0 wt%, based on the aminoplast prepolymers, of acidic catalysts,
c) reacting the prepolymers at temperatures between 20 to 90°C under formation of the aminoplast, whereby the aminoplast content of the dispersion being from 0.1 to 20 wt%, based on the anhydrous inorganic particles, the solids content comprising inorganic particles in the dispersion being from 0.5 to 35 wt% and the residence time being from 10 to 45 min, and thereafter the modified inorganic particles are dried at from 20 to 180°C and in a residence time of from 0.1 to 8 hours with removal of the liquid phase.

The outer coat of the modified inorganic particles can also be obtained by adding C₁-C₁₀-aldehydes in form of 5 to 50% aqueous solutions or in form of mixtures of 5 to 99 wt% of water and 95 to 1 % by mass of C₁-C₈-alcohols, which optionally contain from 0.05 to 1.0 wt% based on the C₁-C₁₀-aldehydes, of acidic catalysts, in the course of from 10 to 90 min at from 50 to 90°C to the dispersion of laden particles instead of aminoplast prepolymers.

Under the described conditions the free cations present in the interlamellar space of the untreated particles are replaced by the at least one C₁-C₃₀ amino compound like melamine or melamine cation. This exchange causes in turn an increase of the interlamellar space due to the larger molecules replacing the native cations. The addition of a small amount of C₁-C₁₀ aldehyde, like formaldehyde, promotes the formation of an outer shell comprising an aminoplast. The modified inorganic particles are characterized by strong aldehyde scavenging effect. This is in particular due to the presence of intercalated amino compounds like melamine or its cations.

In an embodiment of the present invention at least one modified inorganic particle having the above features or a mixture of at least one modified inorganic particle and a non-modified inorganic particle is mixed with at least one aldehyde based resin, in particular a formaldehyde based resin, most preferably an aminoplast based resin. The aldehyde based resins are preferably applicable as adhesives or glues. Examples for aminoplast formaldehyde resins applicable as adhesives are melamine-formaldehyde-resins (MF), melamine-urea-formaldehyde-resin (MUF) or urea-formaldehyde-resin (UF). It is also conceivable to use mixtures comprising at least two of said aminoplast formaldehyde resins. In general it is also further possible to use any phenol-formaldehyde resin as an adhesive or glue.

In a preferred embodiment at least one modified inorganic particle or a mixture of at least one modified inorganic particle and a non-modified inorganic particle is mixed with at least one aldehyde based resin in an amount between 1 to 30 wt% of said particle, preferably 2 to 20 wt%, in particular preferably 3 to 15 wt% based on the total content of solid resin.

The at least one modified inorganic particle or the mixture of at least one modified inorganic particle and a non-modified inorganic particle applicable as aldehyde scavenger can further be mixed with at least one hydrophobic agent and/or at least one hardener. The amount of hardener added varies and depends on the amount of modified inorganic particles added to the resin. Thus, if only a small amount of modified inorganic particles is applied a larger amount of hardener has to be used and vice versa.

It is in particular of an advantage to apply at least one inorganic particle or a mixture of at least one modified inorganic particle and a non-modified inorganic particle, in particular in combination with said aldehyde resin and further components, in the production process of WBP, in particular wood particle boards, OSB, LDF, MDF and/or HDF and plywood.

Beside their aldehyde scavenging effect the modified inorganic particles have additional advantages. The addition of an amino compound like melamine in form of the modified inorganic particles does not cause a pH shift to a higher alkalinity which usually would cause longer hardening times of the resin used as binder or adhesive in the panel. Instead, the time required for a complete curing is now approximately the same as without the addition of free melamine. This in turn means that the addition of extra hardener to the resin is not necessary.

A further advantage of using the modified particles is their positive influence on the properties and performance of the panels. This is particular true for modified particles with intercalated melamine and/or melamine cations. Thus, the panels comprising the modified inorganic particles are characterized by a decreased swelling in water, improved mechanical properties according to standard for corresponding boards, for example EN312 for particle boards. Additionally, thermo-mechanical properties, like heat deflection temperature, and the flame retardancy properties are improved, smoke formation is reduced.

Due to the size of the modified particles with an average diameter from 5 nm to 20,000 nm, preferably from 100 nm to 10,000 nm, the particles can be charged to the adhesive in an easy manner. Thus, no extra technical equipment is required in the production process of the panels.

The objects of the present invention are also solved by a composition applicable as an adhesive according to claim 7.

The composition according to the present invention, in particular for use as an adhesive in wood based panels, comprises at least one modified inorganic particle or a mixture of at least one modified inorganic particle and a non-modified inorganic particle as described above, at least one aldehyde based resin, at least one hydrophobic agent and/or solvent.

In an embodiment of the invention the composition comprises
- 1 to 30 wt% of at least one modified inorganic particle or a mixture of at least one modified inorganic particle and a non-modified inorganic particle as described above,
- 50 to 70 wt% of at least one aldehyde based resin, in particular formaldehyde based resin,
- 0,5 to 10 wt% of at least one hydrophobic agent,
- 0 to 10 wt % of at least one hardener, and
- 0 to 50 wt% of a solvent, in particular water, glycols, mono-, di- and triols, i.e. ethanol, butanol, glycol, glycerin or mixtures thereof.

In an embodiment of the present invention the adhesive comprises a formaldehyde based resin selected from a group comprising aminoplast resins, in particular melamine-formaldehyde-resins (MF), melamine-urea-formaldehyde-resins (MUF), urea-formaldehyde-resins (UF), and phenol containing resins.

The hardener used in the adhesive is preferably selected from a group comprising acids of ammonium salts, in particular of carbonic acids, sulfuric acids, sulfonic acids, hydrochloric acid, phosphoric acid and nitric acid.

However, it is also conceivable to omit the hardener from the adhesive. In this case the modified inorganic particles functions as a curing agent. The ability to act as a curing agent is in particular influenced by the alkaline strength of the intercalated amino compound and thus by the acidic strength of the corresponding ammonium ion and the amount of replaced cations in the clay.

This is particular the case when melamine and/or melamine cations are intercalated into the layered structure of the particles.

The at least one hydrophobic agent as ingredient of the adhesive is preferably selected from a group comprising paraffin, waxes, C₁₀-C₃₀ fatty acid derivatives or water dispersion of paraffin and waxes, in particular 60 wt% water dispersions of paraffin and waxes.

The composition according to the invention is used as an adhesive or glue in the production of WBPs, in particular in PB (particle boards), OSB (oriented strand boards), LDF (low density fibreboards), MDF (medium density fibreboards) and/or HDF (high denisty fibreboards) and plywood.

The panels comprising the composition according to the invention show a reduced aldehyde, in particular formaldehyde emission, when compared to boards without such a composition or adhesive. By applying the composition comprising the modified inorganic particles the aldehyde emission can be even reduced to an amount equivalent to the aldehyde amount released by an adhesive comprising additional melamine. However, since the addition of further melamine is avoided the process conditions like time, pressure and temperature do not have to be adapted. Therefore, no loss in productivity occurs.

The panels comprising the present composition have improved mechanical properties and reduced swelling in water properties as shown. Mechanical properties of said panel's are in standard range or better for application in dry rooms. Furthermore, the swelling in water is reduced on the level of MUF adhesives having an equivalent amount of melamine.

The object of the present invention is also being solved by the methods according to claim 13 to 15.

Accordingly, a method for scavenging an aldehyde, in particular formaldehyde, in an aldehyde based resin, in particular a formaldehyde based resin, is provided, whereby 1 to 30 wt% of at least one of the above described modified inorganic particles or the mixture of at least one modified inorganic particle and a non-modified inorganic particle is added to a dispersion of at least one aldehyde based resin in a solvent.

Furthermore, a method of accelerating the curing process of an aldehyde based resin, in particular a formaldehyde based resin, is provided comprising adding 1 to 30 wt% of at least one of the above described modified inorganic particles or the mixture of at least one modified inorganic particle and a non-modified inorganic particle to a dispersion of at least one aldehyde based resin in a solvent.

It is also provided a method for improving the properties of at least one wood based panel, in particular for reducing swelling in water, increasing transverse tensile strength and/or bending strength of said panel, comprising adding 1 to 30 wt% of at least one of the above described modified inorganic particles or the mixture of at least one modified inorganic particle and a non-modified inorganic particle to a dispersion of at least one aldehyde based resin in a solvent.

In one embodiment the dispersion comprises at least one formaldehyde based adhesive and hydrophobic agents. The dispersion might also comprise at least one hardener, and at least one solvent.

The present invention is further explained in more detail based on the following examples.

### Example 1

Commercially available urea-formaldehyde-(UF) glues with a formaldehyde: urea ration of ≤ 1,05 are considered. The composition of a glue for production of particle boards e. g. additives, hydrophobic agent, curing agent etc. remains, comparing to industrial compositions, standard as well as dilution of a glue paste with water to 50 %. Modified inorganic particles as aldehyde scavenger are added to the glue simultaneously with other additives. The curing agent is added to the glue paste prior to spraying of a glue paste on the wood chips. The amount of scavenger is calculated in % of solid material on solids of glue which is app. 67 %.

Considering this approach, 20,6 g of a modified inorganic particle like a melamine-clay particle, i.e. 6 % regarding the total solid content of a glue, is dispersed in 59.7 g water. 492.5 g of urea-formaldehyde glue, 27.5 g of hydrophobic agent in a 60 % emulsion (this corresponds to 0.5 wt% of hydrophobic agent regarding the total mass of the particle board) are mixed and homogenised with the melamine-clay particles. 9.9 g ammonium nitrate in a 50 % solution (this corresponds to 1.5 wt% of hardener regarding the total solid content of a glue) as curing agent is added. The gel time of this glue paste, tested at 100 °C, is 4.0 min.

3093 g of wood chips (core chips, max length app. 3 cm, humidity lower than 4%) are mixed in a rotating drum. With the help of a pump injection 557.6 g of the glue paste is sprayed on the wood chips. 1.4 kg of the so prepared wood chips are put in a metal form of 460 x 440 mm and pressed to a single layer particle board (PB) with 10 mm thickness and a density of 700 kg/m³. Press temperature is 200°C and press time 80 sec. From this PB three test pieces with a weight of app. 110 g are cut. The pieces are tested according to the EN 120 using the so called Perforator method. The formaldehyde content of the three samples is shown below in Table 1.

The obtained particle boards fulfil the emission limit of the standard requirements of F**** resp. Super E-zero as it is commonly addressed in industry.

### Comparative example 1.1

492.5 g of urea-formaldehyde glue, 27.5 g of hydrophobic agent emulsion, 58.7 g of water and 9.9 g ammonium nitrate as curing agent are mixed together and homogenised. The gel time of this unmodified glue paste, tested at 100°C is 3.9 min.

Using this glue paste wood chips were glued and a particle board was pressed under the same conditions as in Example 1.

**Table 1: Formaldehyde content in the particle board, tested according to EN120**

| **Test pieces** | **Formaldehyde content (mg/100g PB)** |
|---|---|
| **Example 1, piece 1** | 1.1 |
| **Example 1, piece 2** | 1.4 |
| **Example 1, piece 3** | 1.3 |
| **Comparative example 1, piece 1** | 13.1 |
| **Comparative example 1, piece 2** | 13.9 |
| **Comparative example 1, piece 3** | 11.6 |

As can be seen from the data in Table 1 the particle boards obtained using an adhesive composition with the aldehyde scavenger shows a strongly reduced (ca. 10 times) formaldehyde concentration and thus formaldehyde emission of the particle boards comprising the modified inorganic particles as aldehyde scavenger corresponds to the set standards F**** or Super E-zero as mentioned above.

The curing speed of an adhesive comprising the modified inorganic particles as aldehyde scavenger remains on the level of original glue without the modified inorganic particles, more precisely in the range of ± 10 % difference. If melamine is added, the curing speed is reduced by at least 60 %.

The properties from original glue and from glue comprising the modified inorganic particles as scavenger are as stated in Table 2. Both glue types were tested as compositions or paste for gluing i. e. 50 % dispersions containing corresponding additives. The gel time corresponds to the time the resin or glue needs to harden. The gel time is determined using the apparatus "Gelnorm" by the Swiss company "Gel Instrumente AG".

**Table 2: Glue paste properties**

| **Property** | **Unit** | **Original glue** | **Glue with 6 % FA Scavenger** |
|---|---|---|---|
| Amount of glue | [%] | 50 | 50 |
| Viscosity at 20° C (Brookfield) | [mPas] | 370 | 386 |
| pH | | 8.7 | 7.6 |
| Gel time with 1.5 % curing agent at 100° C (Geltimer) | [min] | 3.9 | 4.0 |
| Gel time with 1.5 % curing agent at 100° C (water bath) | [s] | 67.3 | 69.0 |

The properties of particle boards obtained using the two different types of glues are shown in Table 3.

**Table 3: Particle board characteristics**

| **Property, Standard** | **Unit** | **Glue original** | **Glue with 6 % FA Scavenger** |
|---|---|---|---|
| Board thickness | [mm] | 10 | 10 |
| Density | [kg/m³] | 700 | 700 |
| Moisture content EN 322 | [%] | 9.9 | 9.7 |
| Bending strength EN 310 | [N/mm²] | 22.2 | 27.5 |
| Modulus of elasticity in bending EN 310 | [N/mm²] | 3357 | 3269 |
| Transverse tensile strength (tensile strength perpendicular to the plane of the board) EN 319 | [N/mm²] | 0.89 | 1.28 |
| Transverse tensile strength EN 319 and cooking test EN 1087-1 | [N/mm²] | 0 (particle board is destroyed) | 0.17 |
| Swelling in thickness after immersion in water EN 317 | [%] | 10.7 | 6.4 |

### Comparative example 1.2

492.5 g of urea-formaldehyde glue, 27.5 g of hydrophobic agent emulsion, 59,6 g of water, 9,9 g melamine, i.e. 3 % regarding the total solid content of a glue, and 9.9 g ammonium nitrate as curing agent are mixed together and homogenised. The gel time of this glue paste, tested at 100°C, is 27 min.

### Example 2

41.3 g of a melamine-clay particles, i.e. 12 % regarding the total solid content of a glue, is dispersed in 65.2 g water. 492,5 g of urea-formaldehyde glue, 27.5 g of hydrophobic agent emulsion are mixed together and homogenised. The gel time of this glue paste, tested at 100°C is 4.9 min.

Using this glue paste wood chips were glued and a particle board is pressed under the same conditions as in Example 1.

### Comparative Example 2.1

492.5 g of urea-formaldehyde glue, 27.5 g of hydrophobic agent emulsion and 63.1 g of water are mixed together and homogenised. The gel time of this unmodified glue paste, tested at 100°C is 71 min.

### Example 3

41.3 g of a melamine-clay particle, i.e. 12 % regarding the total solid content of a glue, is dispersed in 60.7 g water. 492.5 g of urea-formaldehyde glue, 27.5 g of hydrophobic agent emulsion and 9.9 g ammonium nitrate as curing agent are mixed together and homogenised. The gel time of this glue paste tested at 100°C is 3.3 min.

Using this glue paste wood chips were glued and a particle board is pressed under the same conditions as in Example .1

In comparison to comparative example 1 the gel time is significant lower with the same amount of hardener. This is due to the higher amount of melamine clay scavenger added to the glue.

### Example 4

Commercially available urea-formaldehyde-(UF) glues with a formaldehyde: urea ration of ≤ 1,05 are considered. The composition of a glue for production of particle boards e. g. additives, hydrophobic agent, curing agent etc. remains, comparing to industrial compositions, standard as well as dilution of a glue paste with water to 50 %. A mixture of H-modified montmorillonite and kaolinite as curing agent/aldehyde scavenger are added to the glue simultaneously with other additives. The curing agent is added to the glue paste prior to spraying of a glue paste on the wood chips. The amount of scavenger is calculated in % of solid material on solids of glue which is app. 67 %.

Considering this approach, 5,15 g of a H-modified montmorillonite together with 15,45 g kaolinite, i.e. 6 % regarding the total solid content of a glue, is dispersed in 59.7 g water. 492.5 g of urea-formaldehyde glue, 27.5 g of hydrophobic agent in a 60 % emulsion (this corresponds to 0.5 wt% of hydrophobic agent regarding the total mass of the particle board) are mixed and homogenised with the montmorillonite and kaolinite particles. 9.9 g ammonium nitrate in a 50 % solution (this corresponds to 1.5 wt% of hardener regarding the total solid content of a glue) as curing agent is added. The gel time of this glue paste, tested at 100 °C, is 4.3 min.

3093 g of wood chips (core chips, max length app. 3 cm, humidity lower than 4%) are mixed in a rotating drum. With the help of a pump injection 557.6 g of the glue paste is sprayed on the wood chips. 1.4 kg of the so prepared wood chips are put in a metal form of 460 x 440 mm and pressed to a single layer particle board (PB) with 10 mm thickness and a density of 700 kg/m³. Press temperature is 200°C and press time 80 sec. From this PB three test pieces with a weight of app. 110 g are cut. The pieces are tested according to the EN 120 using the so called Perforator method. The formaldehyde content of the three samples is shown below in Table 4.

The obtained particle boards fulfil the emission limit of the standard requirements of F**** resp. Super E-zero as it is commonly addressed in industry.

**Table 4: Formaldehyde content in the particle board, tested according to EN120**

| **Test pieces** | **Formaldehyde content (mg/100g PB)** |
|---|---|
| **Example 4, piece 1** | 1.3 |
| **Example 4, piece 2** | 1.2 |
| **Example 4, piece 3** | 1.5 |

## Claims

1. Use of at least one inorganic particle having a layered structure and being modified by cation exchange, in particular as a functional additive,
a) as an aldehyde scavenger, in particular formaldehyde scavenger in an aldehyde based resin, in particular a formaldehyde based resin, and / or
b) as a curing agent for curing an aldehyde based resin, in particular a formaldehyde based resin, and / or
c) in at least one wood based panel (WBP), in particular a particle board, OSB, LDF, MDF, HDF and plywood, for improving the properties of said panels, in particular for reducing swelling in water, improving mechanical properties, in particular increasing transverse tensile strength and/or bending strength of said panel.

2. Use according to claim 1, **characterized in that** the at least one inorganic particle is being modified by cation exchange using at least one cation selected from the group containing H⁺, NH⁴⁺, Al³⁺, Fe³⁺, Sn²⁺, Mg²⁺, Li⁺, Mn²⁺, melamine derivatives, thiourea, thiourea derivates, urea, urea derivatives, guanidine, guanidine derivatives, cyanamide, dicyandiamide, sulfonamides, aniline, alkyl and aryl amines, alkyl and aryl amides, proteins, amino acids intercalated into the layered structure of the inorganic particle.

3. Use according to claim 1 or 2, **characterized in that** a mixture of at least one inorganic particle having a layered structure and being modified by cation exchange and at least one non-modified inorganic particle having a layered structure is applied.

4. Use according to claim 1 or 3, **characterized in that** the at least one by cation exchange modified inorganic particle comprises at least one aminoplast as an outer coat and at least one polyfunctional C₁-C₃₀ amino compound selected from the group comprising melamine, melamine derivatives, urea, urea derivatives, guanidine, guanidine derivatives, cyanamide, dicyandiamide, sulfonamides, aniline, alkyl and aryl amines, alkyl and aryl amides, proteins and/or amino acids intercalated into the layered structure of the inorganic particle.

5. Use according to at least one of the preceding claims, **characterized in that** the at least one modified inorganic particle or a mixture of at least one modified inorganic particle and at least one non-modified inorganic particle is mixed with at least one aldehyde based resin, preferably formaldehyde based resin, in particular preferably an aminoplast based resin, in an amount between 1 to 30 wt% of said particle, preferably 2 to 20 wt%, in particular preferably 3 to 15 wt% based on the total content of the solid resin.

6. Use according to one of preceding claims, c**haracterized in that,** the at least one modified inorganic particle or a mixture of at least one modified inorganic particle and at least one non-modified inorganic particle is further mixed with at least one hydrophobic agent and/or at least one hardener.

7. Composition for use as an adhesive, in particular for use in panels, comprising at least one modified inorganic particle or a mixture of at least one modified inorganic particle and at least one non-modified inorganic particle according to one of the claims 1 to 4, at least one aldehyde based resin, at least one hydrophobic agent and/or a solvent.

8. Composition according to claim 7, **characterized in that** it comprises
- 1 to 30 wt% of at least one modified inorganic particle or a mixture of at least one modified inorganic particle and at least one non-modified inorganic particle according to one of the claims 1 to 4
- 50 to 70 wt% of at least one aldehyde based resin,
- 0,5 to 10 wt% hydrophobic agents,
- 0 to 10 wt % of at least one hardener, and
- 0 to 50 wt% of a solvent, in particular water and/or alcohols.

9. Composition according to claim 7 or 8, **characterized in that** the at least one aldehyde based resin is selected from a group comprising aminoplast resins, in particular melamine-formaldehyde-resins (MF), melamine-urea-formaldehyde-resins (MUF), urea-formaldehyde-resins (UF), and phenol containing resins.

10. Composition according to one of claims 7 to 9, **characterized in that,** the hardener is selected from a group comprising ammonium salts of acids, in particular carbonic acids, hydrochloric acid, sulfuric acids, sulfonic acids, phosphoric acid and nitric acid.

11. Composition according to one of the claims 7 to 10 **characterized in that,** the hydrophobic agents are selected from a group comprising paraffin, waxes, C₁₀-C₃₀ fatty acid derivatives or water dispersion of paraffin and waxes.

12. Wood based panels (WBP), in particular particle boards, OSB, LDF, MDF, HDF and/or plywood, comprising at least one composition according to one of the claims 7 to 11.

13. Method of scavenging an aldehyde, in particular formaldehyde, in an aldehyde based resin, in particular a formaldehyde based resin, comprising adding 1 to 30 wt% of at least one modified inorganic particle or a mixture of at least one modified inorganic particle and at least one non-modified inorganic particle according to claims 1 to 4 to a dispersion of at least one aldehyde based resin in a solvent.

14. Method for curing process an aldehyde based resin, in particular a formaldehyde based resin, comprising adding 1 to 30 wt% of at least one modified inorganic particle or a mixture of at least one modified inorganic particle and at least one non-modified inorganic particle according to claims 1 to 4 to a dispersion of at least one aldehyde based resin in a solvent.

15. Method of for improving the properties of at least one wood based panel, in particular for reducing swelling in water, increasing transverse tensile strength and/or bending strength of said panel, comprising adding 1 to 30 wt% of at least one modified inorganic particle or a mixture of at least one modified inorganic particle and at least one non-modified inorganic particle according to claims 1 to 4 to a dispersion of at least one aldehyde based resin in a solvent.
